# EUROPEAN PATENT APPLICATION

(11) **EP 3 190 827 A1**
(43) Date of publication of application: **12.07.2017**
(21) Application number: 15835669.1
(22) Date of filing: 24.08.2015
(51) Int. Cl.: H04W 36/08

(54) **BASE STATION AND USER DEVICE**

(30) Priority: 28.08.2014 JP 2014174331
(71) Applicant: NTT DOCOMO, INC., Chiyoda-ku Tokyo 100-6150 (JP)
(72) Inventor: UCHINO, Tooru, Tokyo 100-6150 (JP); TAKAHASHI, Hideaki, Tokyo 100-6150 (JP); HAPSARI, Wuri Andarmawanti, Tokyo 100-6150 (JP); OFUJI, Yoshiaki, Tokyo 100-6150 (JP)
(74) Representative: Hoffmann Eitle
(86) International application number: PCT/JP2015/073753
(87) International publication number: WO 2016/031779

(57) **Abstract**

Some techniques for implementing proper RACH-less handover control are provided. One aspect of the present invention relates to a base station including a communication control unit configured to control radio communication with user equipment, a capable cell information storage unit configured to store capable cell information indicating a RACH-less handover capable cell and a RACH-less handover determination unit configured to determine whether the user equipment is RACH-less handover capable.

## Description

### TECHNICAL FIELD

The present invention relates to a radio communication system.

### BACKGROUND ART

In a LTE (Long Term Evolution) system, handover control is always performed to cause user equipment (UE) in a RRC (Radio Resource Control) connected state to communicate in an optimal cell. Specifically, the user equipment measures communication conditions for adjacent cells under measurement control by a base station (evolved NodeB: eNB) and upon detecting a cell having better communication quality than that of the presently connected cell, indicates this event to the base station. Upon receiving this indication, the base station transmits a handover instruction to the user equipment for causing the user equipment to transition to the cell, and the user equipment attempts to connect to the target cell specified by the handover instruction.

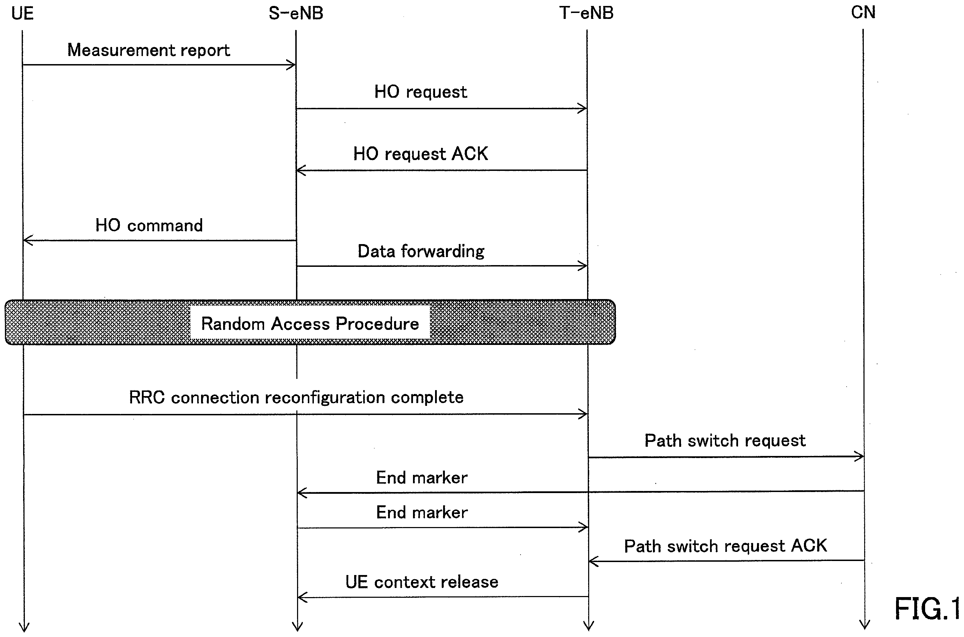

FIG. 1 is a sequence diagram for illustrating handover control in a LTE system. As illustrated in FIG. 1, the user equipment (UE) measures communication conditions for adjacent cells under measurement control by the presently connected base station (S-eNB) and reports measurements (Measurement report) to the base station (S-eNB). Upon detecting a cell having better communication quality than the presently connected cell, the base station (S-eNB) transmits a handover request (HO request) to a target base station (T-eNB) serving the detected cell. Upon receiving an acknowledgement (HO request ACK) for the handover request from the target base station (T-eNB), the base station (S-eNB) transmits a handover instruction to the user equipment (UE) and forwards data, whose transmission to the user equipment (UE) has not been completed yet, to the target base station (T-eNB).

Upon receiving the handover instruction, the user equipment (UE) performs a Random Access (RA) procedure to connect to the target base station (T-eNB) specified by the handover instruction. Upon completing the connection to the target base station (T-eNB), the user equipment transmits a RRC connection reconfiguration complete to the target base station (T-eNB). Upon receiving this message, the target base station (T-eNB) transmits a Path switch request to a core node (CN) to indicate that the connecting entity of the user equipment (UE) has been changed. Then, the core node changes destination of packets destined for the user equipment (UE) from the source base station (S-eNB) to the target base station (T-eNB).

See 3GPP TS 36.300 V12.2.0 (2014-06) and 3GPP TS 36.213 V12.2.0 (2014-06) for details, for example.

### SUMMARY OF INVENTION

### [PROBLEM TO BE SOLVED BY THE INVENTION]

In current LTE specifications, it is defined that user equipment necessarily performs the RA procedure to establish uplink synchronization for handover, and accordingly instantaneous interruption involved in the RA procedure occurs for the handover. Meanwhile, there are actually cases where it is unnecessary to establish the uplink synchronization for the RA procedure (such as intra-frequency handover). In the cases, the instantaneous interruption of communication may occur due to the unnecessary RA procedure.

In the cases where the RA procedure is not needed, RACH (Random Access Channel)-less handover control, where the RA procedure is omitted and the handover is performed without conducting the RA procedure, is considered to avoid reduction in throughput due to the instantaneous interruption for the handover.

In the current LTE specification, however, no solution for determining which cells or base stations are RACH-less handover capable is defined. In other words, when the current handover procedure is activated, it is not determined whether there is a difference of uplink transmission timings between a source cell and a target cell, and it is not determined whether the handover requires the RA procedure. As a result, it cannot be determined whether the handover can be performed with the RACH-less handover, and accordingly the RACH-less handover cannot be activated.

Also, no operation for failure of the RACH-less handover is defined. In the current handover procedure, it is defined that upon receiving a handover instruction, user equipment activates a T304 timer and finishes the handover operation before expiration of the timer. Accordingly, if the T304 timer expires without completion of the RA procedure, the user equipment determines that the handover has failed and activates a reconnection procedure. In the RACH-less handover, however, the RA procedure is omitted, and the T304 timer activated in response to receiving the RACH-less handover instruction is not stopped and necessarily expires. As a result, the user equipment will activate the unnecessary reconnection procedure, which reduces the throughput.

In light of the above-stated problem, one object of the present invention is to provide some techniques for implementing proper RACH-less handover control.

### [MEANS FOR SOLVING THE PROBLEM]

In order to overcome the above object, one aspect of the present invention relates to a base station comprising: a communication control unit configured to control radio communication with user equipment; a capable cell information storage unit configured to store capable cell information indicating a RACH-less handover capable cell; and a RACH-less handover determination unit configured to determine whether the user equipment is RACH-less handover capable.

Another aspect of the present invention relates to user equipment comprising: a transmission and reception unit configured to communicate with a base station via a cell; an adjacent cell information management unit configured to manage adjacent cell information regarding an adjacent cell of a presently connected serving cell; and a RACH-less handover determination unit configured to transmit a PRACH (Physical Random Access Channel) to the adjacent cell during connection to the serving cell, determine whether RACH-less handover to the adjacent cell is capable based on timing information indicated in a RAR (Random Access Response) received for the transmitted PRACH and timing information applied in the serving cell, and indicate the determination to the base station.

Further another aspect of the present invention relates to user equipment comprising: a transmission and reception unit configured to communicate with a base station via a cell; a handover control unit configured to control RACH-less handover from a presently connected source cell to a target cell; and a timer management unit configured to manage a timer for determining completion of the RACH-less handover, wherein upon receiving a RACH-less handover instruction from the source cell, the timer management unit activates the timer, and upon receiving a predefined message from the target cell of the RACH-less handover, the timer management unit stops the timer.

### [ADVANTAGE OF THE INVENTION]

According to the present invention, proper RACH-less handover control can be implemented.

### BRIEF DESCRIPTION OF DRAWINGS

FIG. 1 is a sequence diagram for illustrating handover control in a LTE system;
FIG. 2 is a schematic diagram for illustrating a radio communication system according to one embodiment of the present invention;
FIG. 3 is a block diagram for illustrating an arrangement of a base station according to a first embodiment of the present invention;
FIG. 4 is a flowchart for illustrating a RACH-less handover determination operation in the base station according to the first embodiment of the present invention;
FIG. 5 is a block diagram for illustrating an arrangement of user equipment according to the first embodiment of the present invention;
FIG. 6 is a flowchart for illustrating a RACH-less handover determination operation in the user equipment according to the first embodiment of the present invention;
FIG. 7 is a block diagram for illustrating an arrangement of user equipment according to a second embodiment of the present invention; and
FIG. 8 is a flowchart for illustrating a RACH-less handover completion determination operation in the user equipment according to the second embodiment of the present invention.

### EMBODIMENTS OF THE INVENTION

Embodiments of the present invention are described below with reference to the drawings.

In the embodiments stated below, a base station and user equipment are disclosed for performing RACH-less handover, where the handover is conducted without performing RA procedures.

Summarizing the first embodiment of the present invention, determination as to whether a target cell is a RACH-less handover capable cell is made by the base station and the user equipment. The base station possesses capable cell information indicating whether adjacent cells are the RACH-less handover capable cell. When handover to the adjacent cell is performed, the base station determines whether to apply the RACH-less handover based on the capable cell information. On the other hand, the user equipment obtains timing information from the adjacent cell to compare the timing information with timing information of the source cell and if there is no substantial difference of the uplink transmission timings, reports the adjacent cell as a RACH-less handover capable cell to the base station. According to this embodiment, it can be determined whether the RACH-less handover is applicable.

Summarizing the second embodiment of the present invention, upon receiving a RACH-less handover instruction, the user equipment activates a timer, and if the user equipment receives a predefined message from a target cell before expiration of the timer, the user equipment determines that the RACH-less handover has been finished. The timer may be a T304 timer in the LTE specification, for example. According to this embodiment, it is possible to determine whether the RACH-less handover has been finished as well as to stop the T304 timer appropriately in the RACH-less handover where the RA procedure is not performed.

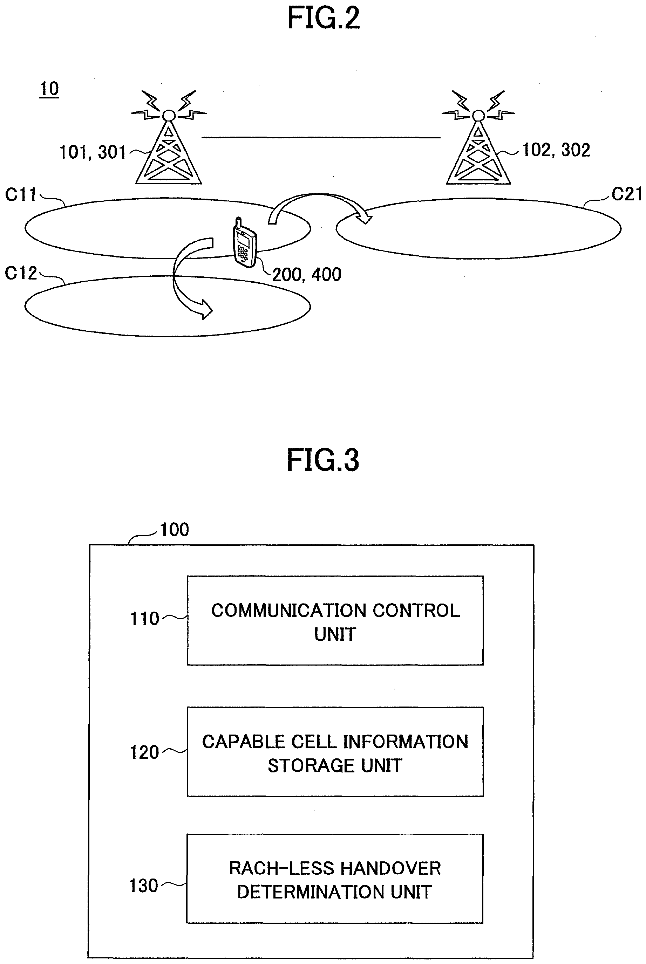

At the outset, a radio communication system according to one embodiment of the present invention is described with reference to FIG. 2. FIG. 2 is a schematic diagram for illustrating a radio communication system according to one embodiment of the present invention.

As illustrated in FIG. 2, a radio communication system 10 has base stations 101, 102 or 301, 302 (which are collectively referred to as base stations 100 or 300 hereinafter) and user equipment 200 or 400. For illustrative convenience, the base station 100 and the user equipment 200 are used in the first embodiment as stated below, and the base station 300 and the user equipment 400 are used in the second embodiment. In one embodiment, the radio communication system 10 is a LTE system or a LTE-Advanced system. In the illustrated embodiment, only the two base stations 101, 102 or 301, 302 are illustrated, but a large number of base stations are generally disposed to cover service areas of the radio communication system 10.

The base stations 100, 300 serve one or more cells and wirelessly communicate with the user equipments 200, 400 via the cells. In the illustrated embodiment, the base stations 101, 301 serve cells C11, C12 and presently connect to the user equipments 200, 400 via the cell C11. On the other hand, the base stations 102, 302 serve cell C21 and are disposed adjacently to the base stations 101, 301. The user equipments 200, 400 measure communication conditions for adjacent cells C12, C21 during connection to the cell C11 and reports measurements to the base stations 101, 301 (measurement control). When a cell having better communication quality than that of the presently connected cell C11 is found, the base stations 101, 301 indicate a handover instruction, where that cell is specified as a target cell, to the user equipments 200, 400. In embodiments below, handover between the cells C11, C12 and C21 is RACH-less handover capable where the handover can be implemented without performing the RA procedure. Also, the base stations 101, 301 are interconnected to the base stations 102, 302 and can communicate with the base stations 102, 302 via an X2 interface.

The base stations 100, 300 are typically composed of hardware resources such as a communication circuit for radio communication with the user equipments 200, 400, a communication interface for communication with a core network (not shown) and other base stations, a processor for controlling radio communication between the core network and the user equipments 200, 400, a memory and various circuits. Functions and operations in the base stations 100, 300 as stated below may be implemented by the processor or the communication circuit processing or executing data and programs stored in the memory. However, the base stations 100, 300 are not limited to the above-stated hardware arrangement and may have any other appropriate hardware arrangement.

The user equipments 200, 400 camp in any of cells served by the base stations 100, 300 and wirelessly communicates with the base stations 100, 300 via the cell. In embodiments below, the user equipments 200, 400 are conducting the RACH-less handover from a source cell of the base stations 101, 301 to a target cell of the base stations 102, 302. However, the present invention is not limited to it and may be applied to the RACH-less handover from a source cell to a target cell within the base stations 101, 301, for example.

The user equipments 200, 400 are any appropriate information processing device having a radio communication function such as a smartphone, a cellular phone, a tablet and a wearable terminal and use various communication services provided from the radio communication system 10 through radio communication with the base stations 100, 300. The user equipments 200, 400 are composed of a CPU (Central Processing Unit) such as a processor, a memory device such as a RAM (Random Access Memory) or a flash memory, a radio communication circuit for transmission and reception of radio signals to/from the base stations 100, 300 and so on. For example, functions and operations in the user equipments 200, 400 as stated below may be implemented by the CPU processing or executing data and programs stored in the memory device or by the radio communication circuit transmitting and receiving radio signals. However, the user equipments 200, 400 are not limited to the above-stated hardware arrangement and may be composed of circuits for implementing one or more of the operations as stated below.

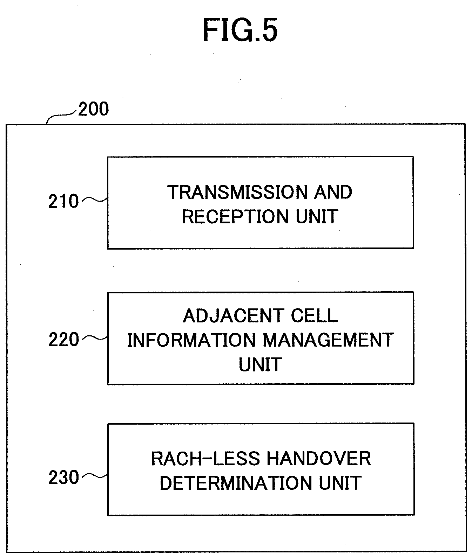

Next, a RACH-less handover determination operation according to the first embodiment of the present invention is described with reference to FIGS. 3-6. In the first embodiment as stated below, it is determined whether a target cell is RACH-less handover capable. A case where the determination is made by the base station 100 is described with reference to FIGS. 3-4, and a case where the determination is made by the user equipment 200 is described with reference to FIGS. 5-6.

FIG. 3 is a block diagram for illustrating an arrangement of a base station according to the first embodiment of the present invention. In the illustrated embodiment, the determination as to whether a target cell is RACH-less handover capable is made by the base station, and the base station instructs the user equipment to perform the RACH-less handover or normal handover depending on the determination. As illustrated in FIG. 3, the base station 100 has a communication control unit 110, a capable cell information storage unit 120 and a RACH-less handover determination unit 130.

The communication control unit 110 controls radio communication with the user equipment 200. Specifically, the communication control unit 110 transmits and receives various control signals and data signals to/from the user equipment 200 via a cell and performs handover control for causing the user equipment 200 to transition to a cell having a better communication condition. In the typical handover control, the user equipment 200 is caused to measure a communication condition for an adjacent cell and report a measurement result (Measurement Report) indicative of a cell identifier (Physical Cell Identifier: PCI) indicative of the measured adjacent cell and the detected communication quality (measurement control). Upon detecting an adjacent cell having better communication quality than that of the presently connected cell (source cell), the communication control unit 110 indicates a handover instruction to the user equipment 200 for causing the user equipment 200 to transition to the detected adjacent cell.

In this embodiment, before indicating the handover instruction, the communication control unit 110 causes the RACH-less handover determination unit 130 to determine whether the adjacent cell is a RACH-less handover capable cell. If the adjacent cell is the RACH-less handover capable cell, the communication control unit 110 indicates a RACH-less handover instruction to the user equipment 200 for causing the user equipment 200 to handover to the adjacent cell without performing RA procedures. On the other hand, if the adjacent cell is not the RACH-less handover capable cell, the communication control unit 110 indicates a normal handover instruction to the user equipment 200 for causing the user equipment 200 to handover to the adjacent cell by performing the RA procedure.

If an information element indicating whether the user equipment 200 has a RACH-less handover capability is defined in UE capability information (UE Capability), the communication control unit 110 may determine whether the RACH-less handover determination is required with reference to the information element in the UE capability information obtained from the user equipment 200. Specifically, the communication control unit 110 may confirm whether the user equipment 200 has the RACH-less handover capability and activate the RACH-less handover determination unit 130 for only the user equipment 200 having the RACH-less handover capability. In other words, for the user equipment 200 that does not have the RACH-less handover capability, the communication control unit 110 may indicate the normal handover instruction to the user equipment 200 without activating the RACH-less handover determination unit 130.

The capable cell information storage unit 120 stores capable cell information indicating a RACH-less handover capable cell. In other words, the base station 100 possesses the capable cell information indicating whether an adjacent cell is a RACH-less handover capable cell in advance. For example, the capable cell information may be generated in a table format indicating whether each adjacent cell is RACH-less handover capable. For example, if adjacent cell a is RACH-less handover capable, the bit "1" may be assigned, and if the adjacent cell a is not RACH-less handover capable, the bit "0" may be assigned. In other examples, the capable cell information may include only RACH-less handover capable adjacent cells as its elements.

In one embodiment, the capable cell information may include at least one or more of an adjacent cell having the same frequency as a source cell and a cell served by the same base station 100 as the source cell as the RACH-less handover capable cell. This is because, if the difference of uplink transmission timings between the source cell and a target cell is smaller than or equal to a predefined threshold, there is no significant difference of uplink transmission timings between the source cell and the target cell and no RA procedure has to be performed for the handover, and accordingly there is a high likelihood that the RACH-less handover to the target cell can be applied. Also, if the source cell and the target cell are served by the same base station 100, there is similarly no substantial difference of uplink transmission timings between the source cell and the target cell, and no RA procedure has to be performed for the handover. Accordingly, there is a high likelihood that the RACH-less handover to the target cell can be applied.

If the base station 100 serves multiple cells, the capable cell information storage unit 120 possesses the above-stated capable cell information for each of the cells, and the RACH-less handover determination unit 130 determines whether the RACH-less handover is capable with reference to the capable cell information regarding the certain cell presently connected by the user equipment 200.

The RACH-less handover determination unit 130 determines whether the user equipment 200 is RACH-less handover capable. In one embodiment, the RACH-less handover determination unit 130 refers to the capable cell information to determine whether the user equipment 200 is RACH-less handover capable from a source cell presently connected by the user equipment 200 to a cell corresponding to a cell identifier reported in a measurement report from the user equipment 200 based on the cell identifier and the source cell.

For example, if the capable cell information indicates whether each adjacent cell is RACH-less handover capable, the RACH-less handover determination unit 130 determines whether an adjacent cell corresponding to a cell identifier for handover specified by the communication control unit 110 is the RACH-less handover capable cell with reference to the capable cell information regarding the source cell stored in the capable cell information storage unit 120. If the adjacent cell is the RACH-less handover capable cell, the RACH-less handover determination unit 130 determines that the adjacent cell is the RACH-less handover capable cell and indicates the determination to the communication control unit 110. On the other hand, if the adjacent cell is not the RACH-less handover capable cell, the RACH-less handover determination unit 130 determines that the adjacent cell is not the RACH-less handover capable cell and indicates the determination to the communication control unit 110.

In other examples, if the capable cell information includes only RACH-less handover capable adjacent cells as its elements, the RACH-less handover determination unit 130 determines whether the adjacent cell corresponding to the cell identifier for handover specified by the communication control unit 110 is included in the capable cell information with reference to the capable cell information regarding the source cell stored in the capable cell information storage unit 120. If the adjacent cell is included in the capable cell information, the RACH-less handover determination unit 130 determines that the adjacent cell is the RACH-less handover capable cell and indicates the determination to the communication control unit 110. On the other hand, if the adjacent cell is not included in the capable cell information, the RACH-less handover determination unit 130 determines that the adjacent cell is not the RACH-less handover capable cell and indicates the determination to the communication control unit 110.

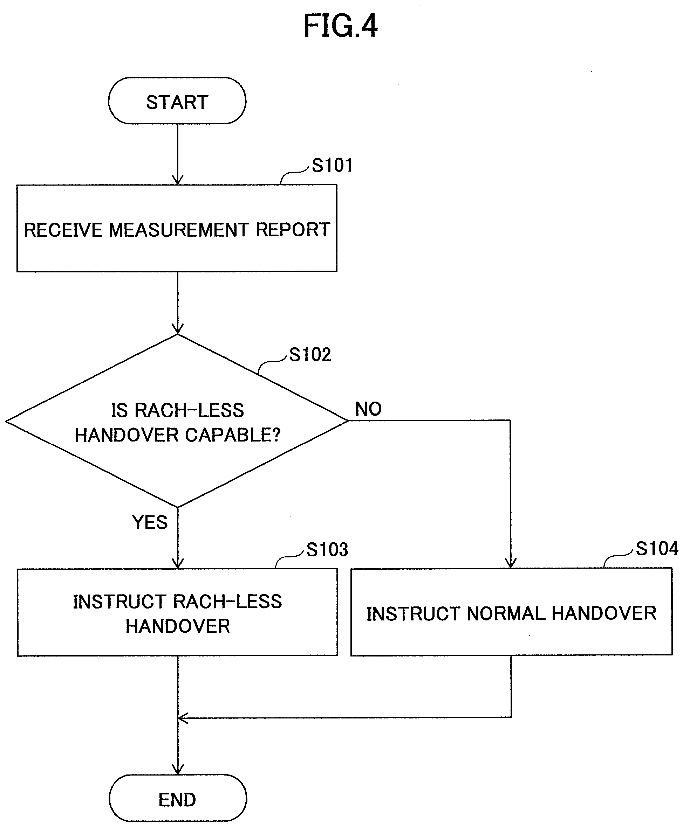

FIG. 4 is a flowchart for illustrating a RACH-less handover determination operation in the base station according to the first embodiment of the present invention. The base station 100 performs measurement control over the presently communicating user equipment 200 and causes the user equipment 200 to measure communication conditions for adjacent cells.

As illustrated in FIG. 4, at step S101, the communication control unit 110 receives a measurement report from the user equipment 200. For example, the measurement report may include a cell identifier (PCI) of the measured adjacent cell and communication quality measured for the adjacent cell.

At step S102, if handover to the adjacent cell is performed based on the received measurement report, the RACH-less handover determination unit 130 determines whether the adjacent cell is the RACH-less handover capable cell with reference to the capable cell information for the source cell. The capable cell information is generated for each cell served by the base station 100 and indicates whether the RACH-less handover from the cell to individual adjacent cells is capable.

If the adjacent cell is the RACH-less handover capable cell (S102; YES), at step S103, the communication control unit 110 indicates a RACH-less handover instruction, where the adjacent cell is specified as the target cell, to the user equipment 200. Upon receiving the RACH-less handover instruction, the user equipment 200 performs the RACH-less handover to the specified target cell without performing the RA procedure.

On the other hand, if the adjacent cell is not the RACH-less handover capable cell (S102: NO), at step S104, the communication control unit 110 indicates a normal handover instruction, where the adjacent cell is specified as the target cell and the RA procedure is included, to the user equipment 200. Upon receiving the handover instruction, the user equipment 200 performs the handover to the specified target cell by performing the RA procedure.

FIG. 5 is a block diagram for illustrating an arrangement of user equipment according to the first embodiment of the present invention. In the illustrated embodiment, the determination as to whether a target cell is RACH-less handover capable is made by the user equipment, and the user equipment reports the determination to a base station. Upon receiving the determination, the base station instructs the user equipment to perform the RACH-less handover or the normal handover depending on the determination. As illustrated in FIG. 5, the user equipment 200 has a transmission and reception unit 210, an adjacent cell information management unit 220 and a RACH-less handover determination unit 230. Herein, the user equipment 200 is presently connecting to the base station 101 (serving base station) via a serving cell or a source cell and performs handover to a cell served by the base station 102.

The transmission and reception unit 210 communicates with the base station 100 via a cell. Specifically, the transmission and reception unit 210 transmits and receives various radio channels such as uplink/downlink control channels and uplink/downlink data channels to/from the base station 100.

The adjacent cell information management unit 220 manages adjacent cell information regarding adjacent cells of a presently connected serving cell. The adjacent cell information may include frequencies and broadcast information for individual adjacent cells of the presently connected serving cell. The adjacent cell information may be indicated from the serving base station 101 in a dedicated signaling at initial access to the serving cell. Alternatively, the adjacent cell information management unit 220 may obtain the broadcast information autonomously transmitted from the adjacent cells.

The RACH-less handover determination unit 230 transmits a PRACH (Physical Random Access Channel) to the adjacent cell during connection to the serving cell, determines whether RACH (Random Access Channel)-less handover to the adjacent cell is capable based on timing information indicated in a RAR (Random Access Response) received for the transmitted PRACH and timing information applied in the serving cell, and indicates the determination to the base station 101. Specifically, the RACH-less handover determination unit 230 attempts transmission of the PRACH to an adjacent cell for a predefined period during connection to the serving cell. The predefined period may be configured by the source base station 101 and be considered as a measurement gap period. Also, the transmitted PRACH may be contention-based or use a dedicated preamble signaled in a dedicated manner.

Upon receiving the PRACH from the user equipment 200, the target base station 102 transmits a RAR for the received PRACH to the user equipment 200. Herein, the user equipment 200 repeats retransmission of the PRACH until receiving the RAR, similar to the normal RA procedure. Note that the retransmission times of the PRACH may be set to be smaller than the retransmission times defined in the normal RA procedure. This is because continuation of retransmission of the PRACH prolongs a communication interruption period in the serving cell.

Upon receiving the RAR from the target base station 102, the RACH-less handover determination unit 230 calculates a difference between a timing advance (TA) value indicated in the received RAR and a timing advance (TA) value applied in the serving cell and if the calculated difference is smaller than or equal to a predefined value, determines that the RACH-less handover to the adjacent cell is capable. The predefined value may be set to a period that can be considered as being free from any significant difference of uplink transmission timings between the source cell and the target cell and may be configured by the serving base station 101, for example.

The RACH-less handover determination unit 230 reports the determination to the serving base station 101. This report may be indicated by extending an existing measurement report or may be indicated in a newly defined control signal. Upon receiving the determination, the serving base station 101 may store the determination and when causing the user equipment 200 to handover to the adjacent cell, indicate the RACH-less handover instruction or the normal handover instruction selectively depending on the determination.

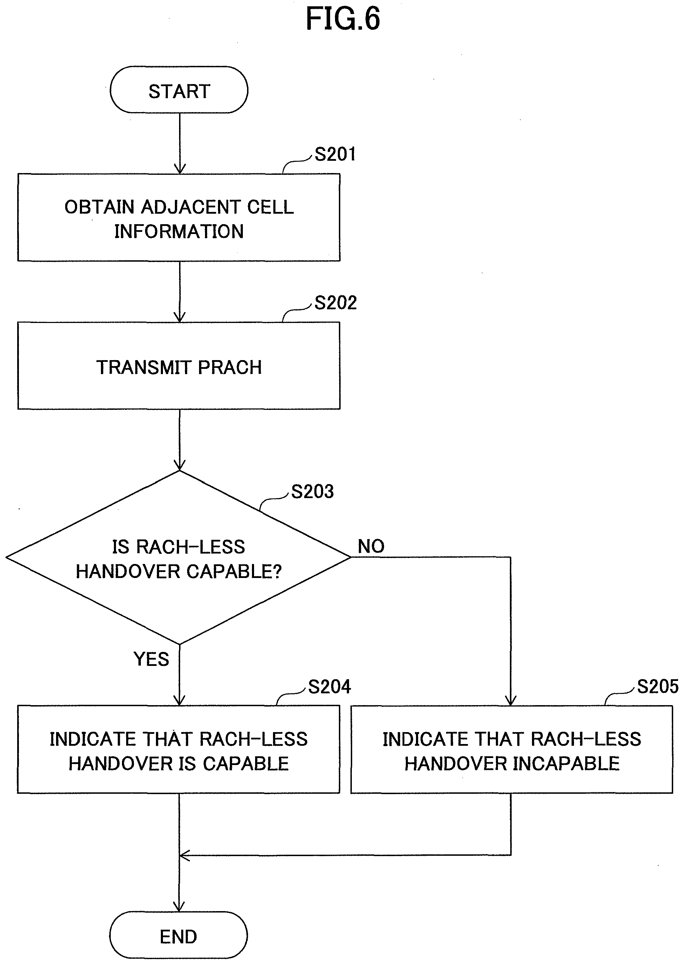

FIG. 6 is a flowchart for illustrating a RACH-less handover determination operation in the user equipment according to the first embodiment of the present invention.

As illustrated in FIG. 6, at step S201, the adjacent cell information management unit 220 obtains adjacent cell information. For example, the adjacent cell information may include frequencies and broadcast information for individual adjacent cells of the presently connected serving cell. For example, the adjacent cell information management unit 220 may obtain the adjacent cell information from the serving base station 101 in a dedicated signaling at initial access or may obtain the broadcast information autonomously transmitted from the adjacent cells.

At step S202, the RACH-less handover determination unit 230 transmits a PRACH to an adjacent cell with reference to the adjacent cell information for a predefined period configured by the serving base station 101. For example, the predefined period may be considered as a measurement gap period.

At step S203, upon receiving a RAR for the PRACH from the adjacent cell, the RACH-less handover determination unit 230 determines whether the RACH-less handover to the adjacent cell is capable based on timing information indicated in the received RAR and timing information applied in the serving cell. The timing information may be, but not limited to, a timing advance (TA) value. In this case, the RACH-less handover determination unit 230 calculates a difference between the timing advance value applied in the adjacent cell and the timing advance value applied in the serving cell and if the calculated difference is smaller than or equal to a predefined value, determines that there is no significant difference of uplink transmission timings between the adjacent cell and the serving cell and accordingly determines that the adjacent cell is a RACH-less handover capable cell. On the other hand, if the calculated difference is greater than the predefined value, the RACH-less handover determination unit 230 determines that there is a significant difference of uplink transmission timing between the adjacent cell and the serving cell and determines that the adjacent cell is not the RACH-less handover capable cell.

If the RACH-less handover to the adjacent cell is capable (S203: YES), at step S204, the RACH-less handover determination unit 230 indicates to the base station 101 that the adjacent cell is the RACH-less handover capable cell. On the other hand, if the RACH-less handover to the adjacent cell is not capable (S203: NO), at step S205, the RACH-less handover determination unit 230 indicates to the base station 101 that the adjacent cell is a RACH-less handover incapable cell. Based on these indications, if the adjacent cell is the RACH-less handover capable cell, the serving base station 101 indicates the RACH-less handover instruction to the user equipment 200 for causing the user equipment 200 to handover to the adjacent cell, and if the adjacent cell is the RACH-less handover incapable cell, the serving base station 101 indicates the normal handover instruction to the user equipment 200.

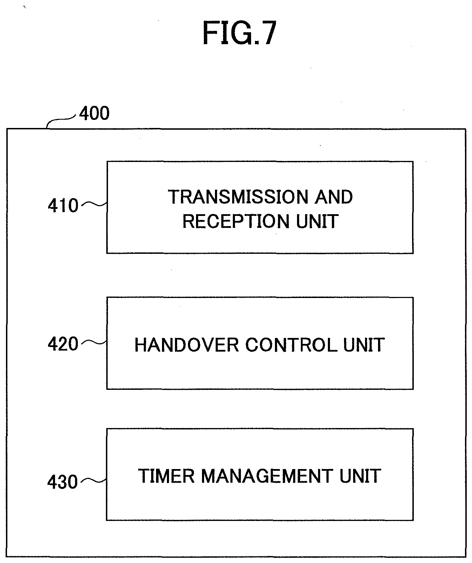

Next, a RACH-less handover completion determination operation according to the second embodiment of the present invention is described with reference to FIGS. 7-8. In the second embodiment as stated below, in current handover procedures using a T304 timer to determine completion of a handover operation, user equipment determines completion of RACH-less handover where the RA procedure is not conducted.

FIG. 7 is a block diagram for illustrating an arrangement of user equipment according to the second embodiment of the present invention. As illustrated in FIG. 7, user equipment 400 has a transmission and reception unit 410, a handover control unit 420 and a timer management unit 430.

The transmission and reception unit 410 communicates with base stations 301, 302 via cells. Specifically, the transmission and reception unit 410 transmits and receives various radio channels such as uplink/downlink control channels and uplink/downlink data channels to/from the base stations 301, 302.

The handover control unit 420 controls RACH-less handover from a presently connected source cell to a target cell. Specifically, upon receiving a RACH-less handover instruction to the target cell from the source base station 301, the handover control unit 420 performs the RACH-less handover without performing the RA procedure by transmitting a scheduling request to the target cell.

The timer management unit 430 manages a timer for determining completion of the RACH-less handover. Upon receiving the RACH-less handover instruction from the source cell, the timer management unit 430 activates the timer, and upon receiving a predefined message from the target cell of the RACH-less handover, the timer management unit 430 stops the timer. For example, the timer may be T304 timer for use in a normal handover procedure in LTE specification or may be a dedicated timer newly defined for the RACH-less handover procedure.

In one embodiment, the predefined message may be a resource assignment message for a resource assignment request message transmitted to the target cell of the RACH-less handover. For example, in LTE systems, the resource assignment request message may be a scheduling request, and the resource assignment message may be an UL grant or a DL assignment. In this case, when the handover control unit 420 at last transmits a scheduling request to the target cell and receives the UL grant indicative of new transmission for the scheduling request, the timer management unit 430 may determine that the RACH-less handover has been completed and stop the timer. On the other hand, if the UL grant has not been received before expiration of the timer, the timer management unit 430 determines that the RACH-less handover has failed and indicates the failure of the RACH-less handover to the handover control unit 420. Upon receiving this indication, the handover control unit 420 may perform normal handover to conduct a reconnection procedure.

If PDCCHs (Physical Downlink Control Channels) for the UL grant and/or the DL assignment are received several times, the timer management unit 430 may determine that the RACH-less handover has been completed and stop the timer. Since there is a likelihood that the PDCCH for the UL grant and/or the DL assignment may be erroneously detected due to noise or others, it is desirable from the viewpoint of reliability that it be determined that the RACH-less handover has been completed based on a predefined number of multiple reception times such as two or more reception times.

In one embodiment, the predefined message may be an acknowledgement for a connection reconfiguration completion message transmitted to the target cell of the RACH-less handover. For example, in LTE systems, the connection reconfiguration completion message may be a RRC connection reconfiguration complete, and the acknowledgement may be a RLC (Radio Link Control)-ACK for the RRC connection reconfiguration complete. In this case, when the handover control unit 420 transmits the RRC connection reconfiguration complete to a target cell and receives the RLC-ACK for a portion or all of the RRC connection reconfiguration complete, the timer management unit 430 may determine that the RACH-less handover has been completed and stop the timer. On the other hand, if the RLC-ACK has not been received before expiration of the timer, the timer management unit 430 determines that the RACH-less handover has failed and indicates the failure of the RACH-less handover to the handover control unit 420. Upon receiving this indication, the handover control unit 420 may perform normal handover to conduct a reconnection procedure. According to this embodiment, the completion determination can be made at a higher accuracy in that the case of erroneous detection of the UL grant can be excluded compared to the above-stated embodiment where the completion determination of RACH-less handover is made based on reception of the UL grant.

In one embodiment, the predefined message may be a predefined downlink control message. Specifically, a downlink control signal is newly defined for the RACH-less handover, and when the base station 302 serving a target cell determines that the RACH-less handover has been completed for the user equipment 400, the base station 302 transmits the downlink control signal to the user equipment 400. In this case, when the handover control unit 420 receives the downlink control signal, the timer management unit 430 may determine that the RACH-less handover has been completed and stop the timer. On the other hand, if the downlink control signal has not been received before expiration of the timer, the timer management unit 430 determines that the RACH-less handover has failed and indicates the failure of the RACH-less handover to the handover control unit 420. Upon receiving this indication, the handover control unit 420 may perform normal handover to conduct a reconnection procedure. According to this embodiment, the completion determination can be made at a further higher accuracy in that the case of inconsistency of states of RLC layers can be excluded compared to the above-stated embodiment where the completion determination of RACH-less handover is made based on reception of the RLC-ACK.

In the above-stated embodiments, the transmission and reception unit 410 may halt transmission of uplink messages other than the resource assignment request message until it is determined that the RACH-less handover has been completed. For example, in LTE systems, the transmission and reception unit 410 may halt transmission of a PUCCH (Physical Uplink Control Channel) other than the scheduling request, a SRS (Sounding Reference Signal) and a PUSCH (Physical Uplink Shared Channel) in order to prevent interference in uplinks.

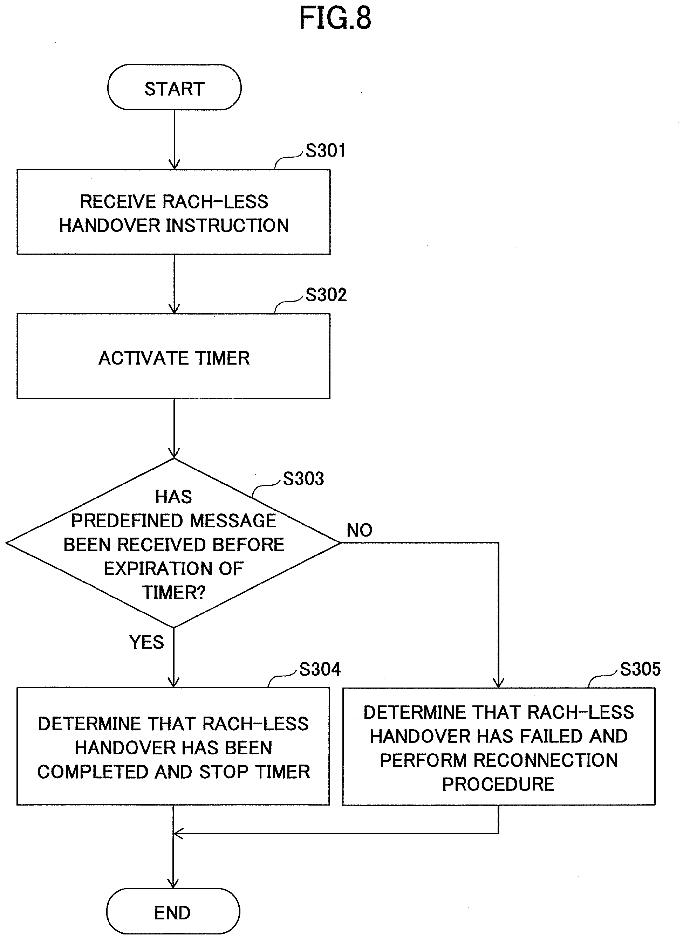

FIG. 8 is a flowchart for illustrating a RACH-less handover completion determination operation in the user equipment according to the second embodiment of the present invention.

As illustrated in FIG. 8, at step S301, the handover control unit 420 receives a RACH-less handover instruction to a target cell from the base station 301.

At step S302, in response to reception of the RACH-less handover instruction, the timer management unit 430 activates a timer. For example, the timer may be T304 timer for use in normal handover procedures in LTE specification or may be a new timer for use in the RACH-less handover procedure.

At step S303, the timer management unit 430 determines whether a predefined message has been received before expiration of the timer. For example, the predefine message may be a resource assignment message (UL grant or DL assignment) for a resource assignment request message (scheduling request) transmitted to a target cell of the RACH-less handover, an acknowledgement (RLC-ACK) for a connection reconfiguration completion message (RRC connection reconfiguration complete) transmitted to the target cell of the RACH-less handover, or a predefined downlink control message transmitted from the base station 302.

If the predefined message has been received before expiration of the timer (S303: YES), at step S304, the timer management unit 430 determines that the RACH-less handover has been completed and stops the timer. On the other hand, if the predefined message has not been received before expiration of the timer (S303: NO), at step S305, the timer management unit 430 determines that the RACH-less handover has failed and performs a reconnection procedure.

Combinations of the first embodiment and the second embodiment as stated above can be used. In other words, if it is determined that the RACH-less handover to a target cell is capable and the RACH-less handover to the target cell is performed according to the first embodiment, it may be determined whether the RACH-less handover has been completed according to the second embodiment.

Although the embodiments of the present invention have been described in detail, the present invention is not limited to the above-stated specific embodiments, and various modifications and variations can be made within the spirit of the present invention as recited in claims.

This international patent application is based on Japanese Priority Application No. 2014-174331 filed on August 28, 2014, the entire contents of which are hereby incorporated by reference.

### LIST OF REFERENCE SYMBOLS

10: radio communication system
100, 101, 102, 300, 301, 302: base station
200, 400: user equipment

## Claims

1. A base station comprising:
a communication control unit configured to control radio communication with user equipment;
a capable cell information storage unit configured to store capable cell information indicating a RACH (Random Access Channel)-less handover capable cell; and
a RACH-less handover determination unit configured to determine whether the user equipment is RACH-less handover capable.

2. The base station as claimed in claim 1, wherein the capable cell information includes at least one or more of an adjacent cell having the same frequency as a source cell and a cell served by the same base station as the source cell as the RACH-less handover capable cell.

3. The base station as claimed in claim 1 or 2, wherein the RACH-less handover determination unit determines whether the user equipment is RACH-less handover capable to a cell corresponding to a cell identifier based on the cell identifier reported in a measurement report from the user equipment and a source cell presently connected to the user equipment with reference to the capable cell information.

4. User equipment comprising:
a transmission and reception unit configured to communicate with a base station via a cell;
an adjacent cell information management unit configured to manage adjacent cell information regarding an adjacent cell of a presently connected serving cell; and
a RACH-less handover determination unit configured to transmit a PRACH (Physical Random Access Channel) to the adjacent cell during connection to the serving cell, determine whether RACH (Random Access Channel)-less handover to the adjacent cell is capable based on timing information indicated in a RAR (Random Access Response) received for the transmitted PRACH and timing information applied in the serving cell, and indicate the determination to the base station.

5. The user equipment as claimed in claim 4, wherein the RACH-less handover determination unit calculates a difference between a timing advance value indicated in the received RAR and a timing advance value applied in the serving cell and if the calculated difference is smaller than or equal to a predefined value, determines that the RACH-less handover to the adjacent cell is capable.

6. User equipment comprising:
a transmission and reception unit configured to communicate with a base station via a cell;
a handover control unit configured to control RACH-less handover from a presently connected source cell to a target cell; and
a timer management unit configured to manage a timer for determining completion of the RACH-less handover,
wherein upon receiving a RACH-less handover instruction from the source cell, the timer management unit activates the timer, and upon receiving a predefined message from the target cell of the RACH-less handover, the timer management unit stops the timer.

7. The user equipment as claimed in claim 6, wherein the predefined message is a resource assignment message for a resource assignment request message transmitted to the target cell of the RACH-less handover.

8. The user equipment as claimed in claim 6, wherein the predefined message is an acknowledgement for a connection reconfiguration completion message transmitted to the target cell of the RACH-less handover.

9. The user equipment as claimed in claim 6, wherein the predefined message is a predefined downlink control message.

10. The user equipment as claimed in any one of claims 6 to 9, wherein the transmission and reception unit halts transmission of uplink messages other than a resource assignment request message until it is determined that the RACH-less handover has been completed.
